# EUROPEAN PATENT SPECIFICATION

(11) **EP 2 066 775 B1**
(45) Date of publication and mention of the grant of the patent: **27.07.2011**
(21) Application number: 06832306.2
(22) Date of filing: 22.11.2006
(51) Int. Cl.: C12G 3/06

(54) **PROCESS FOR PREPARATION OF SAFFRON CREAM LIQUEUR**
VERFAHREN ZUR HERSTELLUNG VON SAFRANCREMELIKÖR
PROCÉDÉ DE PRÉPARATION DE LIQUEUR DE CRÈME SAFRANÉE

(30) Priority: 26.09.2006 IN DE21282006
(43) Date of publication of application: 10.06.2009
(73) Proprietor: Ratnesh Enterprises Pvt., Ltd., RAJ (IN)
(72) Inventor: DHANDHANIA, Arun, Jaipur-302006, Rajasthan State (IN)
(74) Representative: Franks & Co Limited
(86) International application number: PCT/IN2006/000467
(87) International publication number: WO 2008/038294

(56) References cited:
- CA-A1- 2 219 829
- HU-B- 208 391
- anonymous: "Italian coffee cocktail recipe" 1001 cocktails 2005, XP002603294 Retrieved from the Internet: URL:http://www.1001cocktails.com/recipes/m ixed-drinks/700134/cocktail-italian-coffee .html [retrieved on 2010-10-04]
- DATABASE WPI Week 199325 Thomson Scientific, London, GB; AN 1993-204467 XP002603304 "Special vodka production" & SU 1 745 125 A3 30 June 1992 (1992-06-30)
- HIRSCH I.: 'Manufacture of Whiskey, Brandy and Cordials' SHERMAN ENG'R'G CO. 1937, pages 103 - 104, XP008136158

## Description

### Field of Invention:

The present invention relates to the process for the preparation of Saffron Cream Liqueur.

### Background of Invention:

Liqueur is a sweet alcoholic beverage, often flavored with fruit, herbs, spices; flowers, seeds, roots, plants, barks, and sometimes cream, The word liqueur comes from the Latin word liquifacere, which means, "to dissolve". This refers to the dissolving of the flavourings used to make the liqueur.

In some parts of the world, people use the words cordial and liqueur interchangeably. Though in these places the two expressions both describe liquors, made by redistilling spirits with aromatic flavorings and are usually highly sweetened, there are some differences. While liqueurs are usually flavored with herbs, cordials are generally prepared with fruit pulp or juices. Nearly all liqueurs are quite sweet, with a highly concentrated, dessert-like flavor.

Today liqueurs are made worldwide and can be enjoyed many different ways, including by themselves, poured over ice, with coffee, and mixed with cream or other mixers to create cocktails.

There are many categories of liqueurs including: fruit liqueur, cream liqueur, coffee liqueur, chocolate liqueur, schnapps liqueur, brandy liqueur, anise liqueur, nut flavored liqueur and herbal liqueur.

The general principle of liqueur making is to take an alcohol base (sometimes called "neutral spirits") and steep a flavoring in it for a time Next, filter out any remaining solids, and sweetening, and age. Finally, bottle and serve. Those steps are the simple skeleton structure of making a liqueur, but ifs the details (just what flavoring: just how long; just what sweetener), and the variations, that make up the soul of your product. Every recipe is different, and many have somewhat different procedures, but they each pretty much come down to that. And each flavor creates its own dynamics over time, so it may take a while to learn how it all goes together.

US 4957765 discloses a system and method for preparing cream liqueur products having improved emulsion stability and products thereof. The method comprises the steps of preparing a spirit premix by combining spirits, a carbohydrate, and water, and preferably including flavoring and colorant; preparing a protein premix by dissolving citric acid or a salt thereof and caseinate in water; thoroughly mixing the protein premix with cream, preferable double cream; thereafter preparing a product mixture by mixing the spirit premix the mixture of cream and the protein premix; and homogenizing the product mixture so that the average particle size is reduced to less than 5 microns, preferably less than 2 microns.

EP patent 0067592 discloses a liqueur which contains fresh cream yet remains stable against separation despite an alcohol content of from 5% to 25%- The cream base and spirit portions were prepared and combined to form a stable product having a pH above 6.3. The cream base portion was prepared from cream, sugar, an antioxidant, an emulsifier having a hydrophilic/lipophilic balance of less than 12, a soluble casein salt as an emulsifier stabilizer, and flavoring and/or color if desired. The cream base portion was homogenized prior to blending or the blend of the cream base and spirit portions was homogenized, to form a stable emulsion wherein the fat globules were reduced in size such that at least 95% are less than 1 micron in diameter, and substantially none are greater than 8 microns in diameter. The spirit portion was flavored and/or colored as desired.

UA0070479 teaches a cream-liqueur "Stepova Krasunia". Cream-liqueur contains rectified ethyl alcohol of the highest purity, sugar, aromatizer and water.

Additionally it contains dry extract of chicory and dry non-fat milk at a ratio of 1:2 as recalculated per dry substance and fresh egg yolks.

UA0068134 discloses a cream-liqueur containing rectified ethyl alcohol of the highest purity, sugar, emulsifier, aromatizer and water. Additionally the cream-liqueur contained cicorlact (dry extract of chicory and dry skimmed milk at a ratio of 1:2 on the dry substance basis). As emulsifier, soya phytolecithin had been used.

IE0095243 talks about a process for the preparation of a cream liqueur beverage product having a narrow alcohol range, which process comprises carrying out all steps, post-addition of alcohol, in a closed system.

CA 2219829, CN1219582 and TW0386110 teach a process for manufacture of saffron liqueur beverage. The flavoring agent containing saffron is available in nature and is capable of strengthening the flavor of liqueur. The process comprises the steps of soaking the 450g of Saffron in the admixture of silent spirit of 27% strength and the balance demineralized water for 8 hrs at room temperature, for the essential ingredients of saffron to dissolve in the alcoholic solution which should be intermittently stirred for proper mixing the essential ingredients in the said alcoholic solution. To increase the aroma and colour the quantity of Saffron is increased or decreased as per taste. The mixture was then heated at 78°C and then distilled at 80°C in a special distilling apparatus condensing the decoction of saffron liqueur having strength of 9% to 54%, which cooled at the condenser at room temperature for 24 hours, and then kept in freezer. If required, 100 g of sugar refined fine white or equivalent of sugar syrup may be added to and mixed properly with the mixture of 1 bulk liter of admixture. It may also be added to demineralised water in such quantities that the blended Extra Neutral Alcohol contents from 90mg.

EP0875561 teaches a process for preparing saffron flavored beverage, in particular liqueur. The process is characterized in that it comprises the preparation of a flavouring agent containing saffron available in nature and capable of strengthening the flavor of liqueur comprising the steps of: cleaning the saffron, grinding and/or converting it into saffron syrup distilled at 80°C in a special distilling apparatus, condensing the decoction of saffron liqueur having a strength of 5% to 51 %, then cooling and adding this decoction to demineralised water in such quantities that the blended Extra Neutral Alcohol contents from 90 mg to 270 mg decoction of saffron based on the weight of the blended Extra Neutral Alcohol per bulk litre of the finally obtained beverage. The invention can be used in the manufacture of beverages, which are flavoured with saffron.

An online website with the URL: http://www.1001cocktalls.co/recipes/mixed-drinks/700134/cocktail-italian-coffee.html [retrieved on 2010-10-04] discloses an Italian coffee cocktail recipe. The Italian cocktail recipe comprises Strega or Chartruese or Izarra. All of these components are liquers comprising saffron. The Italian coffee cocktail recipe further comprises coffee, sugar and whipped cream.

HU208391 B discloses a drink comprising sour cream and herbal extract. The herbal extract comprising in particular "Indian Saffron".

None of the prior art documents talk about a process of manufacturing a saffron flavoured alcoholic cream beverage.

There are only 2 known processes to produce the alcoholic beverages, one a 'hot' process & the other one is a 'cold' process. The 'hot' process is followed in producing the 'Saffron Liqueur'. The hot process takes less time than the cold process, but it is more expensive than the cold process. It requires a bigger space than the cold process. It requires more investment in plant & equipment than the cold process.

The object of the invention is to propose a process for the preparation of saffron cream liqueur by a cold process to obviate the disadvantages of a hot process.

### Summary of the Invention:

The present invention relates to a process characterised by comprising the following steps:
preparing a saffron concentrate by adding saffron 1 to 5 g of in one liter of E.N.A. (Extra Neutral Alcohol/ Silent Spirit) of 68% OP, i.e., 96% v/v;
intermittently stirring said mixture of ENA/Silent Spirit and saffron for 18 to 36 hours;
extracting an essential oil containing aroma, color and flavor;
filtering said mixture of saffron and the ENA/Silent Spirit to obtain the said saffron concentrate;
diluting said saffron concentrate from 68% OP to 9-45% by adding demineralized water at room temperature;
adding 5% to 15% food grade white milk cream and properly mixing it;
adding 5% to 20% food grade sugar and mixing until the sugar is dissolved; and
adding 1% to 5% food grade flavoring agent and mixing it thoroughly and filtering to get saffron cream liqueur.

Preferably the saffron concentrate, and an admix of ENA and demineralized water have a ratio of 1:9.

Possibly, the process for preparation of the saffron cream liqueur is by the cold process.

Preferably saffron cream liqueur is stored in a clean jar made either of glass or stainless steel at 15°C.

Preferably the flavoring agent/s used are natural flavouring agents.

### Detailed Description of the Invention:

In the following description, the abbreviation "OP" has been used. The abbreviation "OP" stands for overproof (OP) is a term commonly known in the art and refers to beverages containing a greater proportion of alcohol than proof spirit.

The present invention relates to the process of preparation of the saffron cream liqueur. The process in the present invention followed in producing the saffron cream liqueur is the 'cold' process.

The 'hot' process is followed in producing the saffron liqueur, whereas the 'cold' process is followed in producing the saffron cream liqueur. The cold process does not involve the heating of the ingredients for the preparation of the liqueur. The hot process takes lesser time than cold process, but it is more expensive than the cold process, requires a bigger space than the cold process, and requires more investment in plant & equipment than the cold process. However, both the processes achieve the same result. There is no difference in result at all.

The process of the present invention comprises the steps of preparing saffron concentrate by adding saffron 1g to 5g in one liter of ENA (extra neutral alcohol) of 68% OP, i.e., 96% v/v, intermittently stirring the said mixture of ENA and saffron for 18 to 36 hours, extracting the essential oil containing aroma, color and flavor, filtering the said mixture of saffron and the ENA to obtain the saffron concentrate, diluting the said concentrate from 68% OP to 9% to 45% by adding demineralized water at room temperature, adding 5% to 15% food grade white milk cream and properly mixing it, adding 5% to 20% food grade sugar and mixing until the sugar is dissolved, adding 1% to 5% food grade flavoring agent and mixing it thoroughly and filtering to get saffron cream liqueur.

Admix of ENA & DMW is prepared of the required strength, i.e., 18%. Approximately the temperature of admix rises 4°C to 5°C above the room temperature when ENA & DMW are mixed together. The admix is required to be left until the temperature comes down back to room temperature.

Then required quantity of 'saffron' is added and kept the same for 24 to 36 hours with intermittent stirring until all the 'essential oil' i.e., aroma colour & flavor is thoroughly dissolved in the admix of ENA & DMW of 18% strength.

The white cream of 10% and white chocolate of 1% are mixed in. It should be mixed properly for around 12 hours with intermittent stirring until fully mixed in.

Then the Saffron concentrate is added in the required ratio of 1:9 i.e. in the ratio of 1 part saffron concentrate & 9 parts admix of ENA & DMW. so as to become 10 parts by volume of saffron liqueur,

Then food grade sugar of 15% is added & mixed properly until it is completely dissolved in.

Then the saffron cream liqueur is ready to be filtered and filled in an open glass jar or a stainless steel jar and stored in cool place below room temperature of 15%. The saffron cream liqueur is now ready to be bottled in glass bottles and kept In a cool place below room temperature of 10 to 15 degrees.

The invention will now be explained witch the help of examples without limiting the scope of the invention.

### Example 1:

Preparing saffron concentrate by adding saffron 2.5 g in one liter of ENA (187.5 ML of ENA of 68.0 Over Proof (96%v/v) 812.5 ML of DMW) and stirring the said mixture of ENA and saffron for 24 hours so as extract the essential oil containing aroma, color and flavor and filtering the said mixture of saffron and the ENA to obtain the saffron concentrate. The concentrate is then diluted from 69% OP to 9-45% by adding demineralized water at room temperature. 10% food grade white milk cream is added and properly mixed. 10% food grade sugar is added and mixed until the sugar is dissolved. 2.5% food grade flavoring agent is added and mixed thoroughly and the mixture is filtered to get saffron cream liqueur.

## Claims

1. A process **characterised by** comprising the following steps:
preparing a saffron concentrate by adding 1g to 5g of saffron. in one liter of E.N.A. (Extra Neutral Alcohol/ Silent Spirit) of 68% OP, i.e., 96% v/v:
intermittently stirring said mixture of ENA/Silent Spirit and saffron for 18 to 36 hours;
extracting an essential oil containing aroma, color and flavour;
filtering said mixture of saffron and the ENA/Silent Spirit to obtain a said saffron concentrate;
diluting said saffron concentrate from 68% OP to 9% to 45% by adding demineralized water at room temperature;
adding 5% to 15% of food grade white milk cream and properly mixing it;
adding 5% to 20% of food grade sugar and mixing until the sugar is dissolved; and
adding 1% to 5% of food grade flavoring agent and mixing it thoroughly and filtering to get saffron cream liqueur.

2. A process as claimed in claim 1 wherein the saffron concentrate, and an admix of ENA and demineralized water have a ratio of 1:9.

3. A process as claimed in claim 1 wherein the process for preparation of the saffron cream liqueur is by the cold process.

4. A process as claimed in claim 1 wherein saffron cream liqueur is stored in a clean jar made either of glass or stainless steel at 15°C.

5. A process as claimed in claim 1 wherein the flavoring agent(s) used are natural flavouring agents.

## Patentansprüche

1. Verfahren, dass **dadurch gekennzeichnet ist, dass** es die folgenden Schritte umfasst:
Zubereiten eines Safrankonzentrats durch Zugeben von 1 g bis 5 g Safran zu einem Liter E.N.A. (Neutralalkohol, extrafein filtriert/Silent Spirit) von 68% OP, d.h. 96 Vol.-%.
periodisches Rühren des genannten Gemischs aus ENA/Silent Spirit und Safran während 18 bis 36 Stunden;
Ausziehen eines ätherischen Öls, das Aroma, Farbe und Geschmack enthält;
Filtrieren des genannten Gemischs aus Safran und dem ENA/Silent Spirit, um ein genanntes Safrankonzentrat zu erhalten;
Verdünnen des genannten Safrankonzentrats von 68% OP zu 9% bis 45% durch Zugeben von entmineralisiertem Wasser bei Zimmertemperatur;
Zugeben von 5% bis 15% weißer Milchsahne in Lebensmittelqualität und einwandfreies Mischen derselben;
Zugeben von 5% bis 20% Zucker in Lebensmittelqualität und Mischen, bis der Zucker aufgelöst ist; und
Zugeben von 1% bis 5% Geschmacksstoff in Lebensmittelqualität und gründliches Mischen desselben und Filtrieren, um Safran-Sahnelikör zu erhalten.

2. Verfahren nach Anspruch 1, wobei das Safrankonzentrat und eine Beimischung von ENA und entmineralisiertem Wasser ein Verhältnis von 1:9 haben.

3. Verfahren nach Anspruch 1, wobei das Verfahren zur Zubereitung des Safran-Sahnelikörs nach dem Kaltverfahren erfolgt.

4. Verfahren nach Anspruch 1, wobei Safran-Sahnelikör bei 15 °C in einem sauberen Gefäß aus entweder Glas oder Edelstahl gelagert wird.

5. Verfahren nach Anspruch 1, wobei es sich bei dem verwendeten Geschmacksstoff bzw. den verwendeten Geschmacksstoffen um natürliche Geschmacksstoffe handelt.

## Revendications

1. Procédé **caractérisé en ce qu'**il comporte les étapes suivantes :
préparer un concentré de safran en ajoutant 1 g à 5 g de safran par litre d'ENA (alcool extra neutre/alcool bonne bouche) à 68 % d'OP, à savoir. 96 % en volume ;
mélanger par intermittence ledit mélange d'ENA/alcool bonne bouche et de safran pendant 18 à à 36 heures ;
extraire une huile essentielle contenant arôme, couleur et saveur ;
filtrer ledit mélange de safran et d'ENA/alcool bonne bouche pour obtenir un dit concentré de safran ;
diluer ledit concentré de safran de 68 % d'OP à 9 % à 45 % en ajoutant de l'eau déminéralisée à température ambiante ;
ajouter 5 % à 15 % de crème de lait blanc de qualité alimentaire et le mélanger correctement;
ajouter 5 % à 20 % de sucre de qualité alimentaire et mélanger jusqu'à dissolution du sucre : et
ajouter 1 % à 5 % d'agent aromatisant de qualité alimentaire et le mélanger parfaitement et le filtrer pour obtenir une liqueur de crème safranée.

2. Procédé selon la revendication 1, dans lequel le concentré de safran, et un mélange d'ENA et d'eau déminéralisée présentent un rapport de 1:9.

3. Procédé selon la revendication 1, dans lequel le procédé pour la préparation de la liqueur de crème safranée se fait par le procédé à froid.

4. Procédé selon la revendication 1, dans lequel la liqueur de crème safranée est stockée dans un bocal propre réalisé soit en verre soit an acier inoxydable à 15°C.

5. Procédé selon la revendication 1, dans lequel le ou les agents aromatisants utilisés sont des agents aromatisants naturels.
